# EUROPEAN PATENT APPLICATION

(11) **EP 4 764 186 A1**
(43) Date of publication of application: **24.06.2026**
(21) Application number: 25216880.2
(22) Date of filing: 19.11.2025
(51) Int. Cl.: F02C 7/228, F02K 3/10, F23R 3/20

(54) **REHEAT ASSEMBLY FOR A GAS TURBINE ENGINE**

(30) Priority: 19.12.2024 GB 202418686
(71) Applicant: Rolls-Royce plc, London N1 9FX (GB)
(72) Inventor: Powell, Ashley J, Derby, DE24 8BJ (GB)
(74) Representative: Rolls-Royce plc

(57) **Abstract**

There is provided a reheat assembly (300A, 300B, 300C) for a gas turbine engine (10). The reheat assembly (300A, 300B, 300C) comprises a jetpipe casing (310), a support duct (340), a plurality of fuel discharge ports (362), and a fuel distribution passageway (342). The jetpipe casing (310) comprises a reheat core section (320) and a reheat bypass section (330). The support duct (340) radially separates the reheat core section (320) and the reheat bypass section (330). Each fuel discharge port (362) is configured to discharge fuel received from the fuel distribution passageway (342). The fuel distribution passageway (342) is defined by an interior channel embedded within the support duct (340).

## Description

### FIELD

This disclosure relates to a reheat assembly for a gas turbine engine. This disclosure further relates to: a gas turbine engine comprising such a reheat assembly, and an aircraft comprising such a gas turbine engine.

### BACKGROUND

Conventionally, a reheat assembly may be provided to a gas turbine engine for the purpose of providing increased thrust. A reheat assembly increases thrust by injecting fuel into a flow of air which has been exhausted from a core of the gas turbine engine. The fuel is dispersed within the flow of air and mixes with the flow of air to form a fuel-air mixture within the flow of air prior to being entrained into a wake of a flameholder. Within the wake of the flameholder, the fuel-air mixture is combusted in a flame. The heat released by the flame reheats the flow of air from the core and provides additional thrust.

### SUMMARY

According to a first aspect there is provided a reheat assembly for a gas turbine engine, the reheat assembly comprising: a jetpipe casing comprising a reheat core section and a reheat bypass section; a support duct radially separating the reheat core section and the reheat bypass section; a plurality of fuel discharge ports; and a fuel distribution passageway; wherein each fuel discharge port is configured to discharge fuel received from the fuel distribution passageway; and wherein the fuel distribution passageway is defined by an interior channel embedded within the support duct.

In an embodiment, the fuel distribution passageway is integral with the support duct.

In an embodiment, the support duct radially separates the reheat core section from the reheat bypass section throughout an axial extent of the reheat assembly.

In an embodiment, each fuel discharge port is configured to discharge fuel received from the fuel distribution passageway into the reheat core section. In an embodiment, the fuel discharge ports are angularly distributed around a centreline of the reheat assembly. In an embodiment, the fuel discharge ports are uniformly angularly distributed around the centreline of the reheat assembly.

In an embodiment, the fuel distribution passageway extends around at least 180 degrees of an angular extent of the reheat assembly. In an embodiment, at least two of the fuel discharge ports radially oppose each other. In an embodiment, the fuel discharge ports are axially aligned with one another.

In an embodiment, the fuel distribution passageway is in fluid communication with a fuel supply port (e.g., a single fuel supply port) configured to receive fuel from outside the support duct and outside the reheat core section. In an embodiment, the reheat assembly comprises a fuel supply passageway radially extending through the reheat bypass section and the jetpipe casing, with the fluid supply port (e.g., the single fuel supply port) being in fluid communication with the fuel supply passageway.

In an embodiment, the reheat assembly comprises a plurality of radially extending fuel delivery structures, with each fuel discharge port being disposed within a respective fuel delivery structure.

In an embodiment, the reheat assembly comprises a plurality of radially extending flameholders, with each flameholder being angularly aligned with at least one of the fuel discharge ports. In an embodiment, each flameholder is removably mounted to the support duct. In an embodiment: each fuel discharge port is configured to discharge fuel into the reheat core section for mixing with a core flow of air conveyed by the reheat core section; each flameholder is configured to promote formation of a respective wake-stabilised region within the core flow of air; and each flameholder is angularly aligned with at least one of the fuel discharge ports upstream of the respective wake-stabilised region. In an embodiment, the flameholders are axially aligned with one another.

In an embodiment, the reheat assembly comprises a plurality of radially extending spray bars, with each fuel discharge port being disposed within a respective spray bar.

In an embodiment, each flameholder is angularly aligned with and located downstream of at least one of the fuel discharge ports. In an embodiment, each fuel discharge port is disposed within a respective flameholder. In an embodiment, each flameholder includes a fuel inlet in fluid communication with the fuel discharge port disposed within the flameholder, and wherein the fuel distribution passageway is in fluid communication with each fuel inlet via a respective fuel connection branch.

In an embodiment the reheat core section is configured to convey the core flow of air from a reheat core inlet to a reheat core outlet and the reheat bypass section is configured to convey a bypass flow of air from a reheat bypass inlet to a reheat bypass outlet radially outward of the reheat core section.

In an embodiment, each flameholder comprises a cooling air inlet configured to receive a cooling flow of air and a cooling air pathway configured to convey the cooling flow of air from the cooling air inlet through the flameholder for heat exchange therebetween. In an embodiment, the cooling air inlet is configured to receive the cooling flow of air from the reheat bypass section.

According to a second aspect there is provided a gas turbine engine comprising a reheat assembly in accordance with the first aspect.

According to a third aspect there is provided an aircraft comprising a gas turbine engine in accordance with the second aspect.

### BRIEF DESCRIPTION OF THE DRAWINGS

Embodiments will now be described by way of example only with reference to the accompanying drawings, in which:
FIG. 1 is a top view of an aircraft comprising an airframe and a gas turbine engine;
FIG. 2 is a sectional side view of a gas turbine engine comprising a reheat assembly;
FIG. 3 is a sectional side view of a first example reheat assembly;
FIG. 4 is a sectional front view of the first example reheat assembly of FIG. 3;
FIG. 5 is a sectional side view of a second example reheat assembly;
FIG. 6 is a sectional front view of the second example reheat assembly of FIG. 5;
FIG. 7 is a cut-through view of a third example reheat assembly; and
FIG. 8 is a cut-through view of the third example reheat assembly of FIG. 7.

### DETAILED DESCRIPTION

### Aircraft

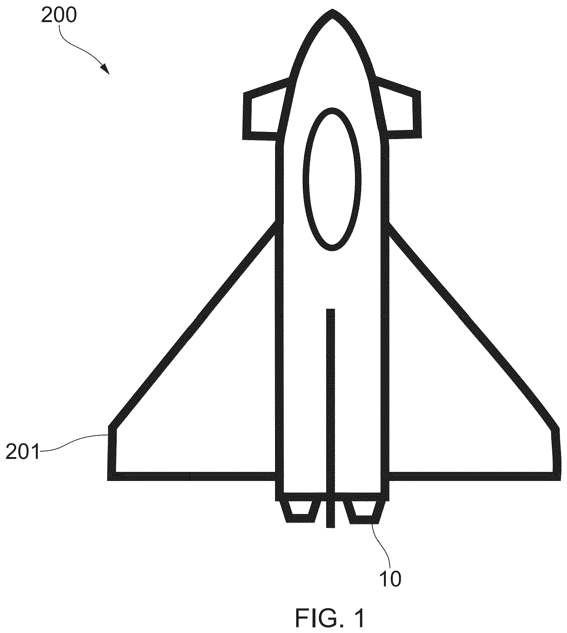

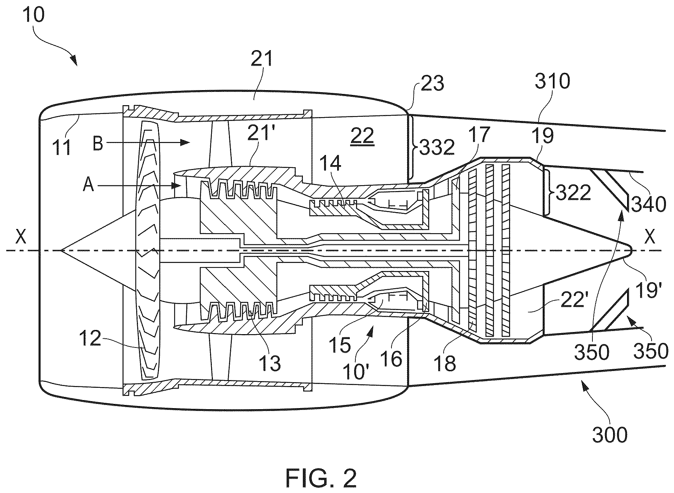

FIG. 1 shows a simplified and schematic view of an aircraft 200 comprising an airframe 201 and a gas turbine engine 10. The gas turbine engine 10 may be in accordance with the gas turbine engine 10 described below with reference to FIG. 2.

### Gas turbine engine

FIG. 2 shows a ducted fan gas turbine engine 10 having a principal and rotational axis X-X. The engine 10 generally comprises an air intake 11, a propulsive fan 12, and an engine core 10'. The engine core 10' comprises, in axial flow series, an intermediate pressure compressor 13, a high-pressure compressor 14, combustion equipment 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 21' defines a core duct 22', in which the engine core 10' is disposed, and further defines a core duct outlet 19 in which an exhaust cone 19' is disposed.

During operation, air entering the intake 11 is accelerated by the fan 12 to produce two air flows: a core flow of air A into the engine core 10' and a bypass flow of air B which passes through the bypass duct 22 to provide propulsive thrust. The intermediate pressure compressor 13 compresses the core flow of air A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

### Reheat assemblies

The gas turbine engine 10 further comprises a reheat assembly 300. The reheat assembly 300 is generally configured to inject fuel into the core flow of air A downstream of the low-pressure turbine 18 and optionally to inject fuel into the bypass flow of air B for the purpose of combustion therein, causing the core flow of air A or the bypass flow of air B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 comprises a reheat core section 320 configured to duct the core flow of air A from a reheat core inlet 322 to a reheat core outlet 324, and a reheat bypass section 330 configured to duct the bypass flow of air B from a reheat bypass inlet 332 to a reheat bypass outlet 334. The reheat bypass section 330 is annular and disposed radially outwardly from the reheat core section 320 such that the reheat bypass inlet 332 is disposed radially outward of the reheat core inlet 322, while the reheat bypass outlet 334 is also disposed radially outward of the reheat core outlet 324. The support duct 304 radially separates the reheat core section 320 and the reheat bypass section 330. The support duct 340 at least partially separates the reheat bypass section 330 from the reheat core section 320 at the upstream end of the jetpipe casing 310.

The jetpipe casing 310 defines an afterburning region in the downstream end of the jetpipe casing 310 in which a core flow of air A and a bypass flow of air B from the reheat core section 320 and the reheat bypass section 330 respectively are able to mix, and in which fuel discharged into the air streams may be ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 21' such that the reheat core inlet 322 of the reheat assembly 300 is aligned with the core duct outlet 19.

Accordingly, the core duct 22' of the gas turbine engine 10 is configured to convey the core flow of air A through the core 10' to the reheat core inlet 322 and the bypass duct 22 of the gas turbine engine 10 is configured to convey the bypass flow of air B through the gas turbine engine 10 to the reheat bypass inlet 332, without passing through the core 10'.

The reheat assembly 300 comprises a plurality of reheat arrangements 350. Each reheat arrangement 350 is configured to enable the ignition of, and promote the stable formation of, a flame within the reheat assembly 300. Each reheat arrangement 350 may be structurally similar (e.g.,. identical).

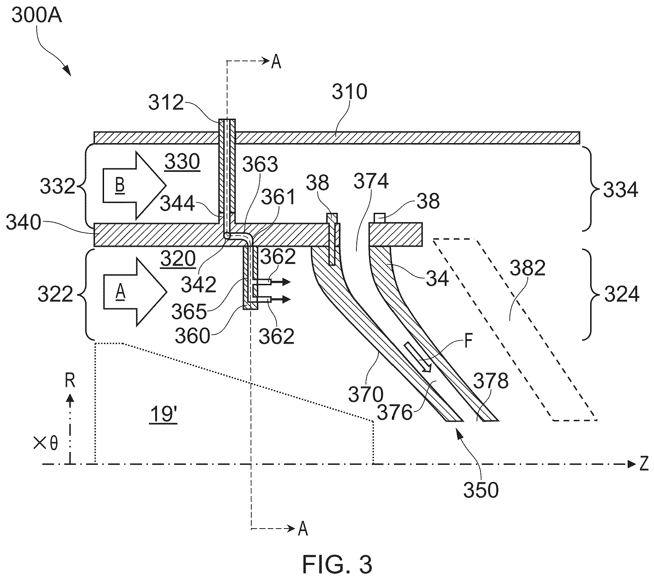

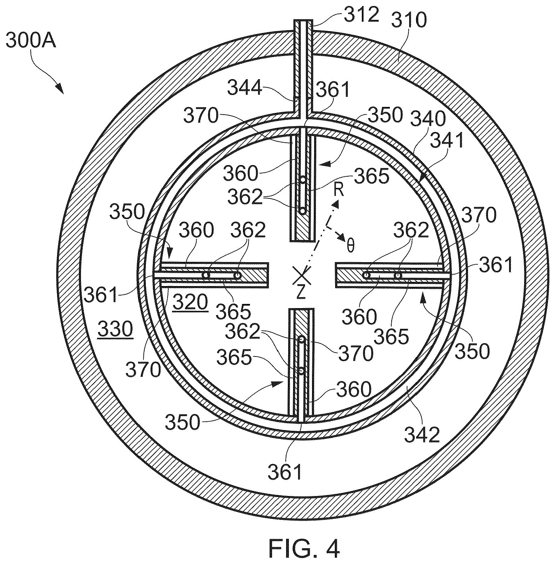

FIG. 3 shows a sectional side view of a first example reheat assembly 300A suitable for use as the reheat assembly 300 in the gas turbine engine 10 of FIG. 2 as described above, with like reference signs indicating common or similar features. FIG. 4 shows a sectional front view of the first example reheat assembly 300A as seen through section A-A indicated by FIG. 3.

The reheat assembly 300A has an axial direction Z, a radial direction R and an angular direction θ. Because FIG. 3 is a sectional side view of the reheat assembly 300A, the angular direction θ is defined through the plane of the page, whereas the axial direction Z and the radial direction R are defined according to the direction of the corresponding coordinate arrows provided by FIG. 3. The reheat assembly 300A is configured such that, when the reheat assembly 300A is incorporated into a gas turbine engine, the axial direction Z of the reheat assembly 300A aligns with a principal and rotational axis of the gas turbine engine. The jetpipe casing 310 defines the axial direction Z, the radial direction R and the angular direction θ of the reheat assembly 300A.

As shown by FIG. 4, the plurality of reheat arrangements 350 are angularly distributed around the jetpipe casing 310 and are structurally identical. In other words, the plurality of reheat arrangements 350 are offset with respect to one another around the angular direction θ of the reheat assembly 300. Although FIG.4 shows a total of four reheat arrangements 350 offset with respect to one another around the angular direction θ of the reheat assembly 300A, it will be appreciated that there may be any suitable number of reheat arrangements, which may be offset with respect to one another around the angular direction θ of the reheat assembly 300A in this way. In this example, and as shown by FIG. 4, the reheat assembly 300A has a substantially circular cross-section in the plane defined by the radial direction R and the angular direction θ. However, in other examples, the reheat assembly 300A may have an alternatively shaped cross-section in the plane defined by the radial direction R and the angular direction θ (e.g., an elliptical cross-section). It will be appreciated that only one of the plurality of reheat arrangements 350 is visible in FIG. 3.

Each reheat arrangement 350 comprises a radially extending spray bar 360 and a radially extending flameholder 370. The spray bar 360 and the flameholder 370 are each radially extending in that they extend (e.g., principally extend) along a direction having a component which is parallel to the radial direction R of the reheat assembly 300A. The spray bar 360 and the flameholder 370 are mounted to the support duct 340, with at least the flameholder 370 being removably mounted the support duct 340. Specifically, each reheat arrangement comprises a plurality of fasteners 38 (e.g., bolts), each of which extends through the support duct 340 to mount the flameholder 370 to the support duct 340. The spray bar 360 may be otherwise mounted to the support duct (e.g., by one or more welds).

The radially extending flameholder 370 of each reheat arrangement 350 is configured to instigate and to maintain a relatively low-speed eddy within the core flow of air A to form a wake-stabilised region 382 located downstream of the flameholder 370.

The radially extending spray bar 360 of each reheat arrangement 350 includes a set of fuel discharge ports 362, such that the set of fuel discharge ports 362 are disposed within the spray bar 360. Each fuel discharge port 362 is configured to discharge fuel into the reheat core section 320 for mixing with the core flow of air A. Each fuel discharge port 362 is located upstream of the wake-stabilised region 382. In this example, the set of fuel discharge ports 362 of the spray bar 360 are located in the same angular plane defined by the axial direction Z and the radial direction R as the flameholder 370, such that the set of fuel discharge ports 362 are substantially angularly aligned with the flameholder 370 upstream of the flow wake-stabilised region 382. In some examples, there may be only a single fuel discharge port 362 in each spray bar 360.

In this example, the set of fuel discharge ports 362 are offset with respect to one another along a radial direction R of the jetpipe casing 310. This ensures that each fuel discharge port 362 injects fuel into the jetpipe casing 310 at a different radial location.

The support duct 340 comprises a fuel distribution passageway 342 and a fuel supply port 344. Specifically, the fuel distribution passageway 340 is defined by an interior channel 341 within the support duct 340 (e.g., within a wall of the support duct 340) such that the fuel distribution passageway 342 is internal to and integral with the support duct 340 (e.g., integral with the wall of the support duct 340). The fuel supply port 344 is in fluid communication with the fuel distribution passageway 342. The fuel supply port 344 is defined as a local external protrusion from the support duct 340 into the reheat bypass section 330. The support duct 340 may be in the form of a unibody produced by an additive layer manufacturing process such as powder bed fusion.

In use, the spray bar 360 of each reheat arrangement 350 receives fuel from the fuel distribution passageway 342. That is, the fuel distribution passageway 342 is in fluid communication with each set of fuel discharge ports 362 (e.g., the set of fuel discharge ports 362 disposed in the spray bar 360 of each reheat arrangement 350). Namely, the spray bar 360 of each reheat arrangement 350 includes a fuel inlet 361 and a fuel delivery passageway 365. Each fuel inlet 361 is in fluid communication with the fuel distribution passageway 342 via a respective fuel connection branch 363 (as best shown by FIG. 3). Each fuel delivery passageway 365 extends between the respective fuel inlet 361 and the corresponding set of fuel discharge ports 362. As a result, the fuel distribution passageway 342 is in fluid communication with the set of fuel discharge ports 362 of each reheat arrangement 350 via the respective fuel delivery passageway 365, the respective fuel connection branch 363 and the respective fuel inlet 361.

The reheat assembly 300A comprises a fuel supply passageway 312 which radially extends (e.g., extends along the radial direction R) through the jetpipe casing 310 and the reheat bypass section 300 to mechanically couple with the fuel supply port 344. In use, the fuel distribution passageway 342 is supplied with fuel by the fuel supply passageway 312 via the fuel supply port 344.

As best shown by FIG. 4, the spray bars 360 (and therefore the sets of fuel discharge ports 362) are uniformly angularly distributed around the axial direction Z (e.g., the centreline) of the reheat assembly 300A. It follows that each set of fuel discharge ports 362 (forming part of a respective spray bar 360) is radially opposed by another set of fuel discharge ports 362 (forming part of a different spray bar 360). As best shown by FIG. 4, the fuel distribution passageway 342 extends around an angular extent of the reheat assembly 300A to the fuel inlet 361 of each spray bar 360. As a result, the fuel distribution passageway 342 extends around the entirety of the angular extent of the reheat assembly 300A. However, in other examples, the spray bars 360 (and the flameholders 370) may be otherwise distributed around the axial direction Z such that the fuel distribution passageway only extends around, for example, 180 degrees or 270 degrees of the angular extent of the reheat assembly 300A. In the first example reheat assembly 300A, the fuel supply port 344 is angularly aligned with the fuel inlet 361 of one of the spray bars 360.

Moreover, each spray bar 360 is axially aligned (e.g., aligned with respect to the axial direction Z) with the other spray bars 360 of the reheat assembly 300A such that each set of fuel discharge ports 362 is axially aligned with the other sets of fuel discharge ports 362. Similarly, each flameholder 370 is axially aligned with the other flameholders 370.

The reheat assembly 300A may be provided with a pilot (not shown) configured to cause ignition of the fuel within the wake-stabilised region 382. In other examples, the fuel may auto-ignite within the wake-stabilised region 382 due to the high temperatures of the air therein without the need for a pilot to be provided.

The flameholders 370 may be in the form of a unibody produced by an additive layer manufacturing process such as powder bed fusion. Each flameholder 370 defines an inlet aperture 374 configured to receive a cooling flow of air from the reheat bypass section 330. The flameholder 370 further defines an outlet aperture 378 which opens into the reheat core section 320. The inlet aperture 374 may be referred to as a cooling air inlet 374 whereas the outlet aperture 378 may be referred to as a cooling air outlet 378.

The flameholder 370 of each reheat arrangement 350 defines an internal flow passageway 376 extending from the inlet aperture 374 to the outlet aperture 378. The internal flow passageway 376 is configured to convey the cooling flow of air from the inlet aperture 374 through an interior of the flameholder to the outlet aperture 378 for heat exchange with the flameholder 370. Once the cooling flow of air reaches the outlet aperture 378, it is discharged into the reheat core section 320. In this way, the internal flow passageway 376 defines a flow direction F for the cooling flow of air through the flameholder 370 and the inlet aperture 374 opens into the interior of the flameholder 370. The internal flow passageway 376 may be referred to as a cooling air pathway 376.

As best shown by FIG. 3, the flameholder 370 of each reheat arrangement 350 is inclined within the reheat core section 320 with respect to the core flow of air A. Namely, a part of a leading edge of the flameholder 370 adjacent to the inlet aperture 374 is more proximal to the reheat core inlet 322 than a part of the leading edge of the flameholder 370 adjacent to the outlet aperture 378. Likewise, a part of a trailing edge of the flameholder 370 adjacent to the inlet aperture 374 is more proximal to the reheat core inlet 322 than a part of the trailing edge of the flameholder 370 adjacent to the outlet aperture 378.

In this example, the spray bar 360 of each reheat arrangement 350 is separate from the flameholder 370 of the same reheat arrangement 350 and is located upstream of the flameholder 370 such that the flameholder 370 is located downstream of the set of fuel discharge ports 362. In other words, in each reheat arrangement 350, the flameholder 370 is offset from the spray bar 360 and thus the set of fuel discharge ports 362. Accordingly a suitable distance between the set of fuel discharge ports 362 and the radially extending flameholder 370 may be selected to select a suitable distance between the set of fuel discharge ports 362 and the wake-stabilised region 382 along the axial direction Z. The distance between the set of fuel discharge ports 362 and the flameholder 370 along the axial direction Z may be selected so as to ensure that the fuel within the core flow of air A does not reach the autoignition temperature prior to entering the wake stabilised region 382.

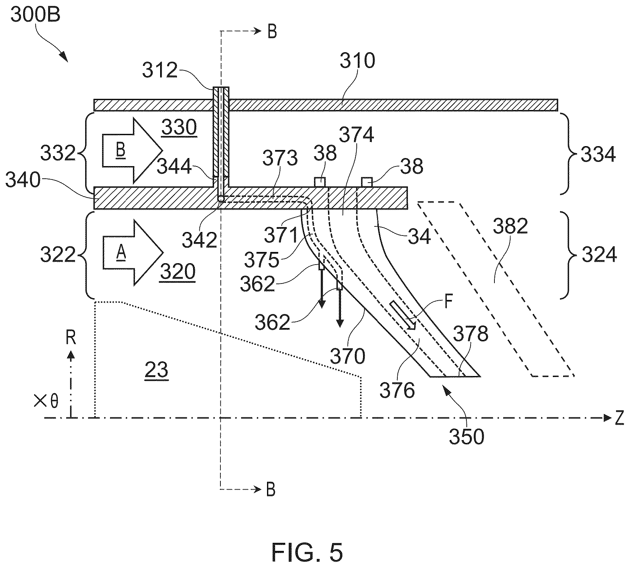

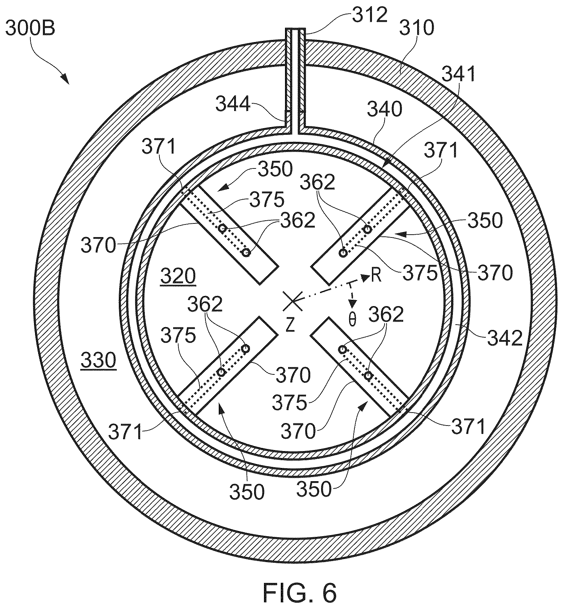

FIG. 5 shows a sectional side view of a second example reheat assembly 300B suitable for use as the reheat assembly 300 in the gas turbine engine 10 of FIG. 2 as described above. FIG. 6 shows a sectional front view of the second example reheat assembly 300B as seen through section B-B indicated by FIG. 5. The second example reheat assembly 300B is generally similar to the first example reheat assembly 300A described above with reference to FIGs. 3 and 4, with like reference signs indicating common or similar features.

However, in contrast to the first example reheat assembly 300A, second example reheat assembly 300B does not comprise any spray bars in which the set(s) of fuel discharge ports 362 are disposed. Instead, each flameholder 370 of each reheat arrangement 350 comprises the respective set of fuel discharge ports 362, a fuel inlet 371 and a fuel delivery passageway 375. Each fuel inlet 371 is in fluid communication with the fuel distribution passageway 342 via a respective fuel connection branch 373 (as best shown by FIG. 5). Each fuel delivery passageway 375 extends between the respective fuel inlet 371 and the corresponding set of fuel discharge ports 362. As a result, the fuel distribution passageway 342 is in fluid communication with the set of fuel discharge ports 362 of each reheat arrangement 350 via the respective fuel delivery passageway 375, the respective fuel connection branch 373 and the respective fuel inlet 371.

In the second example reheat assembly 300B, the fuel supply port 344 is not angularly aligned with the fuel inlet 371 of any of the flameholders 370. That is, the fuel supply port is angularly offset from the fuel inlets 371 of the flameholders 370.

The radially extending fuel spray bars 360 of the first example reheat assembly 300A and the radially extending flameholders 370 of the second example reheat assembly 300B are each examples of radially extending fuel delivery structures 360, 370 which comprise at least one fuel discharge port 362 as described herein (e.g., a fuel discharge port 362 configured to discharge fuel received from the fuel distribution passageway 342).

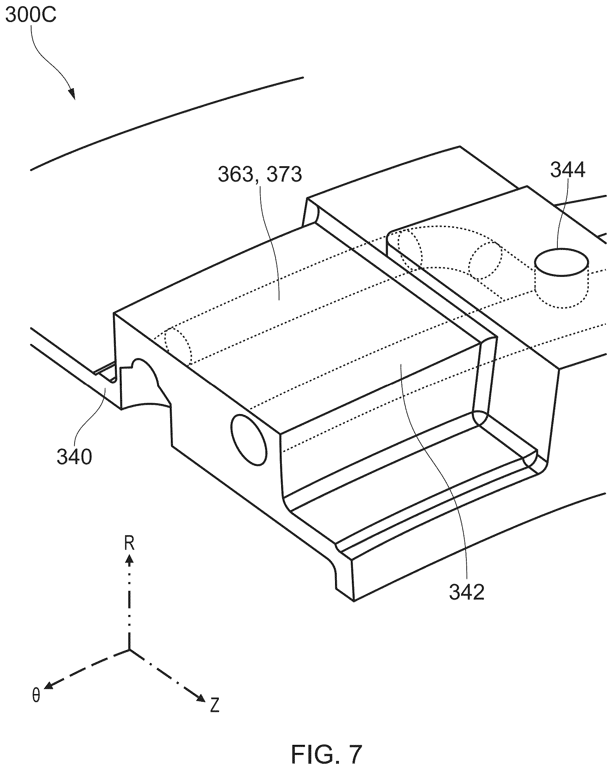

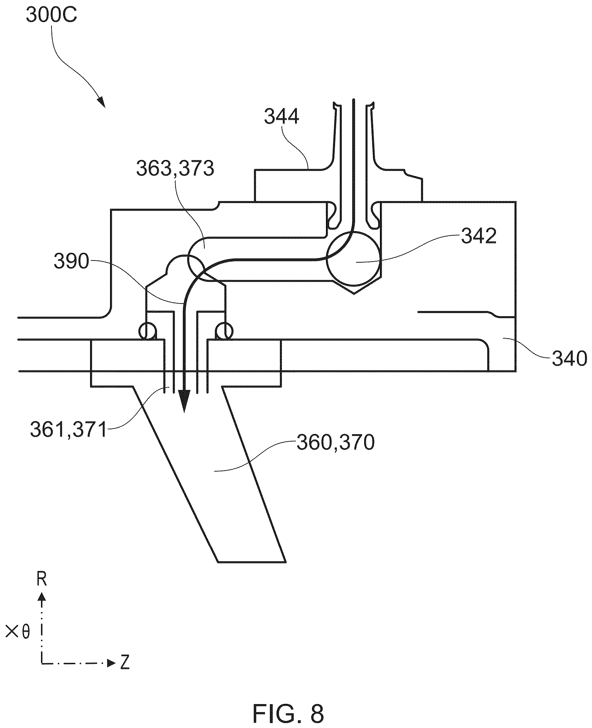

FIG. 7 shows a detailed perspective cut-through view of a third example reheat assembly 300C suitable for use as the reheat assembly 300 in the gas turbine engine 10 of FIG. 2. FIG. 8 shows a detailed side cut-through view of the third example reheat assembly 300C. The third example reheat assembly 300C is generally similar to the first and second reheat assemblies 300A, 300B described above with reference to FIGs. 3 to 6, with like reference signs indicating common or similar features. Only a single reheat arrangement 350 is shown by FIGs. 7 and 8, although it will be appreciated that the third example reheat assembly 300C comprises a plurality of reheat arrangements 350 angularly distributed around the jetpipe casing 310 as described above with reference to FIGs. 2 to 6.

In the third example reheat assembly 300C, the radially extending fuel delivery structure 360, 370 of each reheat arrangement 350 comprises a fuel inlet 361, 371 which is in fluid communication with the fuel distribution passageway 342 (and the fuel supply port 344) via a respective fuel connection branch 363, 373. FIG. 8 also shows a direction of fuel flow 390, in use, from the fuel supply port 344 (and the fuel supply passageway 312, which is not shown) into the radially extending fuel delivery structure 360, 370 via the fuel distribution passageway 342, the fuel connection branch 363, 373 and the fuel inlet 361, 371.

The fuel distribution passageway 342 being embedded within the support duct 340 enables each of the fuel delivery structures 360, 370 to receive fuel for discharge from the relevant fuel discharge port(s) 362 without a dedicated fuel supply system being provided to each fuel delivery structure 360, 370. Such fuel supply systems, as in a previously-considered reheat assembly extend through the reheat bypass section 330 and thus contribute to a pressure drop in the bypass flow of air B passing through the reheat bypass section 330. As a result, reheat assemblies 300A, 300B, 300C in accordance with the present disclosure exhibit relatively lower pressure drops in the bypass flow of air B passing through the reheat bypass section 330, which in turn is associated with more efficient operation of the reheat assembly 300A, 300B, 300C overall (and the gas turbine engine 10 in which it may be incorporated). In particular, in each of the example reheat assembles 300A, 300B, 300C described herein, the support duct 340 comprises (e.g., defines) only a single (e.g., only one) fuel supply port 344. Accordingly, only a single fuel supply passageway 312 extends through the reheat bypass section 330 and the jet pipe casing 310. This is associated with a yet lower pressure drop in the bypass flow of air B passing through the reheat bypass section 330.

Compared to a previously-considered reheat assembly, the fuel distribution passageway 342 being embedded within the support duct 340 reduces a number of parts (e.g., a total part count) of the reheat assembly 300A, 300B, 300C, and in particular reduces a number of parts which mechanically interface with one another within the reheat assembly 300A, 300B, 300C, Such mechanical interfacing is associated with cracking and/or fretting of said parts after periods of use. Accordingly, reheat assemblies 300A, 300B, 300C in accordance with the present disclosure may be more robust in-service.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in civil or military contexts.

## Claims

1. A reheat assembly for a gas turbine engine, the reheat assembly comprising:
a jetpipe casing comprising a reheat core section and a reheat bypass section;
a support duct radially separating the reheat core section and the reheat bypass section;
a plurality of fuel discharge ports; and
a fuel distribution passageway;
wherein each fuel discharge port is configured to discharge fuel received from the fuel distribution passageway; and
wherein the fuel distribution passageway is defined by an interior channel embedded within the support duct.

2. The reheat assembly of claim 1, wherein the fuel discharge ports are angularly distributed around a centreline of the reheat assembly.

3. The reheat assembly of claim 2, wherein the fuel discharge ports are uniformly angularly distributed around the centreline of the reheat assembly.

4. The reheat assembly of any preceding claim, wherein the fuel distribution passageway extends around at least 180 degrees of an angular extent of the reheat assembly.

5. The reheat assembly of any preceding claim, wherein the fuel distribution passageway is in fluid communication with a single fuel supply port configured to receive fuel from outside the support duct and outside the reheat core section.

6. The reheat assembly of claim 5, comprising a fuel supply passageway radially extending through the reheat bypass section and the jetpipe casing, wherein the single fluid supply port is in fluid communication with the fuel supply passageway.

7. The reheat assembly of any preceding claim, comprising a plurality of radially extending fuel delivery structures, wherein each fuel discharge port is disposed within a respective fuel delivery structure.

8. The reheat assembly of any preceding claim, comprising a plurality of radially extending flameholders, and wherein each flameholder is angularly aligned with at least one of the fuel discharge ports.

9. The reheat assembly of claim 8, wherein:
each fuel discharge port is configured to discharge fuel into the reheat core section for mixing with a core flow of air conveyed by the reheat core section;
each flameholder is configured to promote formation of a respective wake-stabilised region within the core flow of air; and
each flameholder is angularly aligned with at least one of the fuel discharge ports upstream of the respective wake-stabilised region.

10. The reheat assembly of claim 8 or claim 9, comprising a plurality of radially extending spray bars, and wherein each fuel discharge port is disposed within a respective spray bar.

11. The reheat assembly of any of claims 8 to 10, wherein each flameholder is angularly aligned with and located downstream of at least one of the fuel discharge ports.

12. The reheat assembly of claim 8 or claim 9, wherein each fuel discharge port is disposed within a respective flameholder.

13. The reheat assembly of claim 12, wherein each flameholder includes a fuel inlet in fluid communication with the fuel discharge port disposed within the flameholder, and wherein the fuel distribution passageway is in fluid communication with each fuel inlet via a respective fuel connection branch.

14. The reheat assembly of any of claims 8 to 13, wherein each flameholder comprises a cooling air inlet configured to receive a cooling flow of air and a cooling air pathway configured to convey the cooling flow of air from the cooling air inlet through the flameholder for heat exchange therebetween.

15. The reheat assembly of any of claims 8 to 14, wherein each flameholder is removably mounted to the support duct.
